# EUROPÄISCHE PATENTSCHRIFT

(11) **EP 0 867 065 B1**
(45) Veröffentlichungstag und Bekanntmachung des Hinweises auf die Patenterteilung: **27.03.2002**
(21) Anmeldenummer: 96942290.6
(22) Anmeldetag: 02.12.1996
(51) Int. Cl.: H02P 3/06

(54) **REIHENSCHLUSSMOTOR MIT ELEKTRISCHER BREMSE**
SERIES MOTOR WITH ELECTRICAL BRAKE
MOTEUR SERIE A FREIN ELECTRIQUE

(30) Priorität: 13.12.1995 DE 19546546
(43) Veröffentlichungstag der Anmeldung: 30.09.1998
(73) Patentinhaber: Dolmar GmbH, 22045 Hamburg (DE)
(72) Erfinder: KRÜGER, Andreas, D-22045 Hamburg (DE); KRAHN, Klemens, D-22851 Norderstedt (DE)
(74) Vertreter: Richter, Werdermann & Gerbaulet
(86) Internationale Anmeldenummer: EP9605319
(87) Internationale Veröffentlichungsnummer: WO9722175

(56) Entgegenhaltungen:
- EP-A- 0 398 609
- DE-A- 3 530 685
- US-A- 5 294 874

## Beschreibung

### Anwendungsgebiet

Die vorliegende Erfindung bezieht sich auf das Gebiet der Elektromotore. Sie betrifft einen Reihenschlußmotor mit elektrischer Bremse, umfassend einen mit einer Ankerwicklung versehenen Anker und wenigstens zwei auf Polschuhen angeordnete Polspulen sowie Schaltmittel, welche in der Betriebsphase des Motors die Polspulen mit der Ankerwicklung in Reihe schalten und die Reihenschaltung mit Anschlußklemmen für die Betriebsspannung verbinden, und welche in der Bremsphase die Verbindung zu den Anschlußklemmen unterbrechen und die Ankerwicklung durch Parallelschalten einer Wicklung kurzschließen.

### Stand der Technik

Ein solcher Reihenschlußmotor ist z. B. aus der DE-A1-35 30 685 (bzw. US-A-4,680,862) oder aus der DE-C2-30 35 185 bekannt.

Bei motorgetriebenen Elektrowerkzeugen wie beispielsweise Kettensägen, Heckenscheren oder Rasenmähern ist es aus sicherheitstechnischen Gründen wünschenswert, den Motor nach dem Abschalten möglichst schnell und sicher abzubremsen, um Verletzungsgefahren durch das nachlaufende Arbeitswerkzeug zu begrenzen oder ganz zu vermeiden. Eine solche Abbremsung kann entweder mechanisch erfolgen oder aber auf elektrischem Wege vorgenommen werden. Die elektrische Bremsung hat dabei den Vorteil, daß sie praktisch verschleißfrei ist, nur geringen zusätzlichen Aufwand erfordert und platzsparend in das Antriebssystem integriert werden kann.

Besonders einfach läßt sich die elektrische Bremsung verwirklichen, wenn das Elektrogerät durch einen Reihenschlußmotor angetrieben wird, bei dem die Feldwicklung und die Ankerwicklung während des Normalbetriebes in Reihe geschaltet an der Versorgungsspannung liegen. In der eingangs genannten DE-C2-30 35 185 ist für die Abbremsung eines solchen Reihenschlußmotors eine Widerstandsbremsung vorgeschlagen worden, bei welcher die Spannungsversorgung unterbrochen und der Anker bzw. die Ankerwicklung über die in Umkehrrichtung geschaltete Feldwicklung und einen in Reihe liegenden NTC-Widerstand kurzgeschlossen wird. Problematisch ist bei dieser Lösung, daß man einen zusätzlichen NTC-Widerstand benötigt und der NTC-Widerstand sehr genau dimensioniert sein muß, um eine wirkungsvolle, verschleißarme Bremsung zu ermöglichen. Ist andererseits der NTC-Widerstand überbrückt, ergeben sich extrem hohe Ströme bei Beginn der Bremsung, welche ein Rundfeuer am Kollektor verursachen.

In der DE-A1-35 30 685 wird gemäß Fig. 1 für die elektrische Abbremsung eines Reihenschlußmotors 10 vorgeschlagen, bei einer aus zwei Polspulen 13, 14 bestehenden Feldwicklung für den Abbremsvorgang die Verbindung zu den Anschlußklemmen 16 zu unterbrechen und nur eine Polspule 14 der Feldwicklung umzupolen und der Ankerwicklung 17 parallel zu schalten. Der Motor bzw. die elektrischen Kontakte in Motor und Schalter werden gemäß der Druckschrift dabei kaum belastet, da beim Kurzschließen mit nur einer Polspule verhältnismäßig geringe Kurzschlußströme auftreten. Nachteilig ist bei dieser Lösung jedoch, daß Antriebs- und Bremsverhalten nicht unabhängig voneinander eingestellt bzw. optimiert werden können: Wenn die Polspulen zur Veränderung des Antriebsverhaltens in der Windungszahl oder Geometrie o. dgl. verändert werden, wirkt sich diese Veränderung ungewollt auch auf das Bremsverhalten aus, weil dieselbe Spule für den Antrieb und die Abbremsung verwendet wird. Eine unabhängige Einstellung wäre allenfalls denkbar, wenn die zum Bremsen verwendete Spule als separate Spule zusätzlich zur Polspule im Stator untergebracht würde. Dazu wäre jedoch bei einem vorhandenen Motor das Blechpaket zu ändern, was einen erheblichen zusätzlichen Aufwand erfordert.

### Aufgabe, Lösung, Vorteile

Es ist daher Aufgabe der Erfindung, einen Reihenschlußmotor mit elektrischer Bremsung zu schaffen, der im Hinblick auf die elektrische Abbremsung mit geringem Aufwand flexibel an die verschiedenen Anwendungsfälle angepaßt werden kann.

Die Aufgabe wird durch die im Anspruch 1 angegebenen Merkmale gelöst.

Hierbei ist bei einem Motor der eingangs genannten Art vorgesehen, daß wenigstens eine der Polspulen in zwei Teilwicklungen unterteilt ist, und daß beim Abbremsen eine der Teilwicklungen umgepolt und mit der Ankerwicklung kurzgeschlossen wird. Durch die Aufteilung der Polspule in zwei Teilwicklungen, die im Antriebsfall hintereinander geschaltet sind, bleibt sie Wirkung der Polspule für den Antrieb unverändert, unabhängig davon, wie die Polspule auf die beiden Teilwicklungen aufgeteilt ist. Durch eine geeignete Wahl der Aufteilung zwischen den Teilwicklungen kann dann die für das Abbremsen vorgesehene Teilwicklung für den Abbremsfall optimiert werden, ohne daß das Antriebsverhalten von dieser Optimierung beeinflußt wird.

Besonders vorteilhaft ist es, wenn gemäß einer bevorzugten Ausführungsform der Erfindung beide Polspulen in Teilwicklungen unterteilt sind, und wenn beim Abbremsen die Reihenschaltung aus je einer Teilwicklung pro Polspule umgepolt und zur Ankerwicklung parallelgeschaltet wird. Hierdurch werden die beim Bremsen entstehenden Belastungen gleichmäßiger auf die Wicklungen und den Motor verteilt.

Der erfindungsgemäße Reihenschlußmotor eignet sich besonders gut als Antriebsmotor für den Antrieb einer motorbetriebenen Kettensäge, weil dadurch zusätzlich zu einer schnell wirkenden mechanischen Notbremse, eine Sicherheitsbremsung beim normalen Abstellen der Säge verwirklicht werden kann.

### Kurze Beschreibung der Zeichnungen

Die Erfindung soll nachfolgend anhand von Ausführungsbeispielen im Zusammenhang mit der Zeichnung näher erläutert werden. Es zeigen
- Fig. 1: den schematischen Aufbau eines elektrisch gebremsten Reihenschlußmotors nach dem Stand der Technik, und
- Fig. 2: den vergleichbaren Aufbau eines bevorzugten Ausführungsbeispiels des Reihenschlußmotors nach der Erfindung.

### Detaillierte Beschreibung der Erfindung und bester Weg zur Ausführung der Erfindung

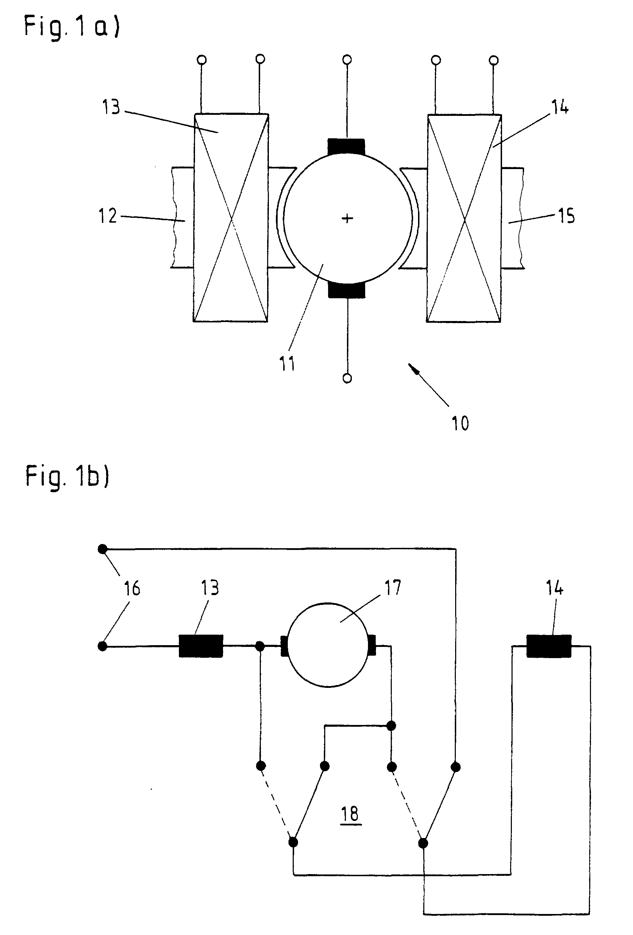

Wie bereits eingangs erwähnt, geht eine bekannte Lösung gemäß Fig. 1 von einem Reihenschlußmotor 10 (Fig. 1a) aus, der einen Anker 11 und zwei auf jeweils einem Polschuh 12 bzw. 15 angeordneten Polspulen 13 bzw. 14 umfaßt. Die Polspulen 13, 14 bilden zusammen die Feldwicklung, während der Anker 11 entsprechende Ankerwicklungen trägt, die über einen Kommutator von außen anwählbar sind. Elektrisch sind die verschiedenen Wicklungen gemäß Fig. 1b miteinander verschaltet. Über einen Schalter 18, der zwei Stellungen einnehmen kann (Antriebsfall: durchgezogene Schalterstellung; Bremsfall: gestrichelt dargestellte Schalterstellung) werden die beiden Polspulen 13 und 14 im Antriebsfall in Reihe mit der Ankerwicklung 17 geschaltet und an Anschlußklemmen 16 für die Versorgungsspannung angeschlossen. Im Bremsfall wird durch Umlegen des Schalters 18 die Verbindung zur einen Anschlußklemme 16 unterbrochen und gleichzeitig die eine Polspule 14 umgepolt und zur Ankerwicklung 17 parallelgeschaltet. Durch die elektromagnetische Wechselwirkung zwischen der rotierenden Ankerwicklung und der parallelgeschalteten Polspule 14 wird der Motor abgebremst. Klar erkennbar ist hier der eingangs beschriebene Nachteil, daß dieselbe Polspule 14 sowohl für den Antriebsfall als auch für den Abbremsfall unverändert verwendet wird und werden muß.

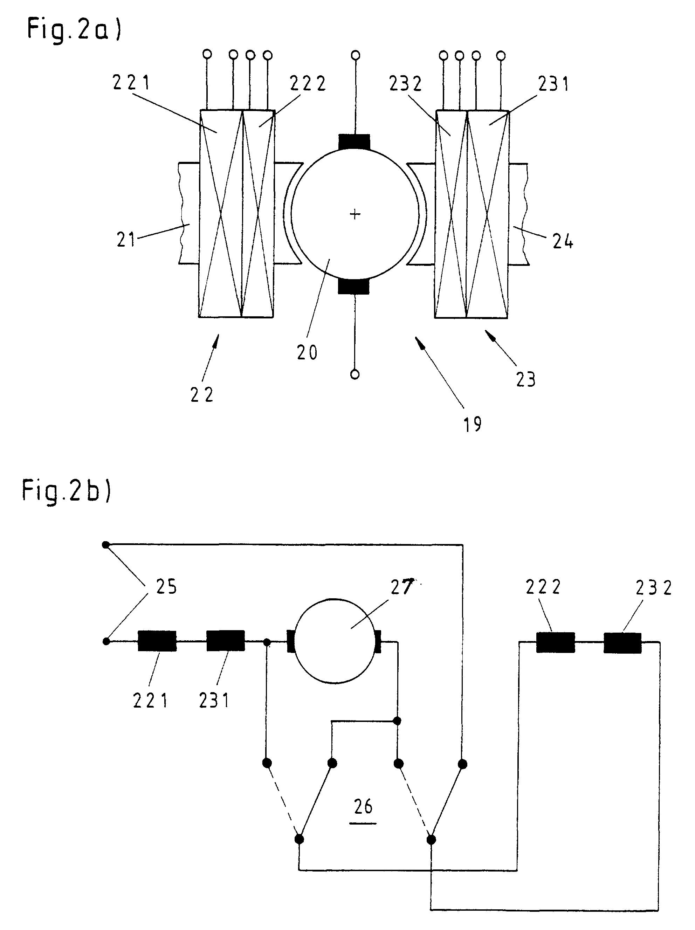

Bei dem in Fig. 2 dargestellten Ausführungsbeispiel des erfindungsgemäßen Motors wird dagegen anders vorgegangen. Gemäß Fig. 2a umfaßt der Reihenschlußmotor 19 auch hier einen Anker 20 und zwei auf Polschuhen 21, 24 angeordnete Polspulen 22 und 23, die zusammen die Feldwicklung bilden. Anders als in Fig. 1 sind jedoch die beiden Polspulen 22 und 23 jeweils in zwei hintereinander angeordnete Teilwicklungen 221 und 222 bzw. 231 und 232 unterteilt. Damit besteht die Möglichkeit, pro Polspule nur eine der Teilwicklungen für Bremszwecke einzusetzen, wobei das Abbremsverhalten durch unterschiedliche Teilverhältnisse der Teilwicklungen 221, 222 bzw. 231, 232 in weiten Grenzen eingestellt und optimiert werden kann.

Die Umschaltung zwischen Antriebs- und Abbremsfall erfolgt gemäß Fig. 2b über einen Schalter 26, der im Antriebsfall (durchgezogene Schalterstellung) alle Teilwicklungen 221, 231 und 222, 232 mit der Ankerwicklung in Reihe schaltet und mit den Anschlußklemmen 25 für die Versorgungsspannung verbindet. Im Abbremsfall (gestrichelte Schalterstellung) wird die Verbindung zu einer Anschlußklemme 25 unterbrochen und die Reihenschaltung aus zwei Teilwicklungen 222 und 232 (je eine aus einer Polspule) umgepolt und über die Ankerwicklung 27 kurzgeschlossen. Es versteht sich dabei von selbst, daß auch andere Kombinationen von Teilwicklungen wie z. B. die Teilwicklungen 221 und 231 oder die Teilwicklungen 222 und 231 zur Abbremsung herangezogen werden können. Es ist aber auch denkbar, nur eine der Teilwicklungen, nämlich 222 oder 232 oder eine andere, für die Abbremsung der Ankerwicklung 27 parallelzuschalten. Schließlich ist es denkbar, beim Vorhandensein von weiteren Polspulen auch diese zusätzlichen Polspulen in Teilwicklungen zu unterteilen und bestimmte Teilwicklungen für Bremszwecke einzusetzen.

Durch die erfindungsgemäße Lösung ergibt sich eine freie Dimensionierbarkeit der für die elektrische Bremsung verwendeten Bremsspulen bzw. -wicklungen, und zwar ohne Einfluß auf die Größe der gesamten Feldwicklung bzw. der Polspulen und somit der Motorauslegung. Hierdurch läßt sich das Bremsverhalten dem Motor anpassen, ohne dabei Änderungen am Blechpaket vornehmen zu müssen, d. h., jede bestehende Motorauslegung läßt sich nachträglich durch eine Änderung im Wickelprozess für den elektrischen Bremsbetrieb einrichten.

Besonders günstig ist der Einsatz eines solchen Motors in einer elektrisch betriebenen Kettensäge, weil hier im normalen Abschaltfall ein gefährliches Nachlaufen der Säge mit geringem Aufwand sicher vermieden werden kann. Durch Kombination mit einer mechanisch wirkenden Notbremse, die beim Rückschlag oder Abrutschen der Säge ausgelöst wird, und die beispielsweise in der DE-A1-31 50 769 beschrieben ist, ergibt sich eine Kettensäge mit hoher Sicherheit in den verschiedenen Situationen des Betriebs.

### Bezugszeichenliste:

- 10, 19: Reihenschlußmotor
- 11, 20: Anker
- 12, 15: Polschuh
- 13, 14: Polspule
- 16, 25: Anschlußklemme
- 17, 27: Ankerwicklung
- 18, 26: Schalter
- 21, 24: Polschuh
- 22, 23: Polspule
- 221, 222: Teilwicklung
- 231, 232: Teilwicklung

## Patentansprüche

1. Reihenschlußmotor (19) mit elektrischer Bremse, umfassend einen mit einer Ankerwicklung (27) versehenen Anker (20) und wenigstens zwei auf Polschuhen (21, 24) angeordnete Polspulen (22, 23) sowie Schaltmittel (26), welche in der Betriebsphase des Motors die Polspulen (22, 23) mit der Ankerwicklung (27) in Reihe schalten und die Reihenschaltung mit Anschlußklemmen (25) für die Betriebsspannung verbinden, und welche in der Bremsphase die Verbindung zu den Anschlußklemmen (25) unterbrechen und die Ankerwicklung (27) durch Parallelschalten einer Wicklung kurzschließen,
**dadurch gekennzeichnet,**
**daß** wenigstens eine der Polspulen (22, 23) in zwei Teilwicklungen (221, 222; 231, 232) unterteilt ist, und daß beim Abbremsen eine der Teilwicklungen (222) umgepolt und mit der Ankerwicklung (27) kurzgeschlossen wird.

2. Reihenschlußmotor nach Anspruch 1,
**dadurch gekennzeichnet,**
**daß** beide Polspulen (22, 23) in Teilwicklungen (221, 222; 231, 232) unterteilt sind, und daß beim Abbremsen die Reihenschaltung aus je einer Teilwicklung (222, 232) pro Polspule (22, 23) umgepolt und zur Ankerwicklung (27) kurzgeschlossen wird.

3. Anwendung eines Reihenschlußmotors nach einem der Ansprüche 1 und 2 für den Antrieb einer motorgetriebenen Kettensäge.

## Claims

1. Series motor (19) with an electrical brake comprising an armature (20) provided with an armature winding (27) and with at least two exciter coils (22, 23) placed on pole shoes (21, 24) as well as switching means (26) which connect in series the exciter coils (22, 23) in series with the armature winding (27) in the operating phase and which connect the series connection with connecting terminals (25) for the operating voltage and which interrupt in the braking phase the connection with the connecting terminals (25) and short-circuit the armature winding (27) by connecting in parallel a winding,
**characterized in**
**that** at least one of the exciter coils (22, 23) is divided into two partial windings (221, 222; 232, 232) and that, when braking, the poles of one of the partial windings (222) are changed and short-circuited with the armature winding (27).

2. Series motor according to claim 1,
**characterized in**
**that** both exciter coils (22, 23) are divided into partial windings (221, 222; 231, 232) and that, when braking, the poles of the series connection made of respectively one partial winding (222, 232) per exciter coil (22, 23) are changed and short-circuited with the armature winding (27).

3. Use of a series motor according to any of the claims 1 and 2 for driving a motor operated chain saw.

## Revendications

1. Moteur série (19) avec un frein électrique qui comprend un induit (20) pourvu d'une bobine d'induit (27) et au moins deux bobines excitatrices (22, 23) placées sur des pièces polaires (21, 24) ainsi que des moyens de commutation (26) qui, dans la phase de fonctionnement du moteur, commutent en série les bobines excitatrices (22, 23) avec la bobine d'induit (27) et qui relient le couplage en série à des bornes d'alimentation (25) pour la tension de service et qui, dans la phase de freinage, interrompent la liaison avec les bornes d'alimentation (25) et qui court-circuitent la bobine d'induit (27) en connectant en parallèle un enroulement,
**caractérisé en ce**
**qu'**au moins l'une des bobines excitatrices (22, 23) est divisée en deux enroulements partiels (221, 222 ; 231, 232) et que, lors du freinage, la polarité de l'un des enroulements partiels (222) est inversée et qu'il est court-circuité avec la bobine d'induit (27).

2. Moteur série selon la revendication 1,
**caractérisé en ce**
**que** les deux bobines excitatrices (22, 23) sont divisées en enroulements partiels (221, 222 ; 231, 232) et que, lors du freinage, le sens de polarité du montage en série constitué par respectivement un enroulement partiel (222, 232) par bobine excitatrice (22, 23) est inversé et le montage est court-circuité avec la bobine d'induit (27).

3. Utilisation d'un moteur série selon l'une des revendications 1 et 2 pour la commande d'une scie à chaîne actionnée par moteur.
